Europäisches Patentamt

European Patent Office

Office européen des brevets

(19)

(11) Veröffentlichungsnummer: **0 244 593**

**A1**

(12) **EUROPÄISCHE PATENTANMELDUNG**

(21) Anmeldenummer: **87103299.1**

(22) Anmeldetag: **07.03.87**

(51) Int. Cl.4: **C02F 3/12 , C02F 3/20 , C02F 3/06**

(30) Priorität: **26.03.86 DE 3610103**

(43) Veröffentlichungstag der Anmeldung:
**11.11.87 Patentblatt 87/46**

(84) Benannte Vertragsstaaten:
**AT BE CH DE ES LI LU**

(71) Anmelder: **Universal Gesellschaft für Umwelttechnik mbH**
**Rudolf-Diesel-Weg 4**
**D-2410 Mölln(DE)**

(72) Erfinder: **Eichholz, Günter, Dipl.-Ing.**
**Hansestrasse 18**
**D-2410 Mölln(DE)**

(74) Vertreter: **Döring, Rudolf, Dr.-Ing.**
**Patentanwälte Dr.-Ing. R. Döring Dipl.-Phys.**
**Dr. J. Fricke Jasperallee 1a**
**D-3300 Braunschweig(DE)**

(54) Einrichtung zur biologischen Reinigung von Abwässern in Teichen.

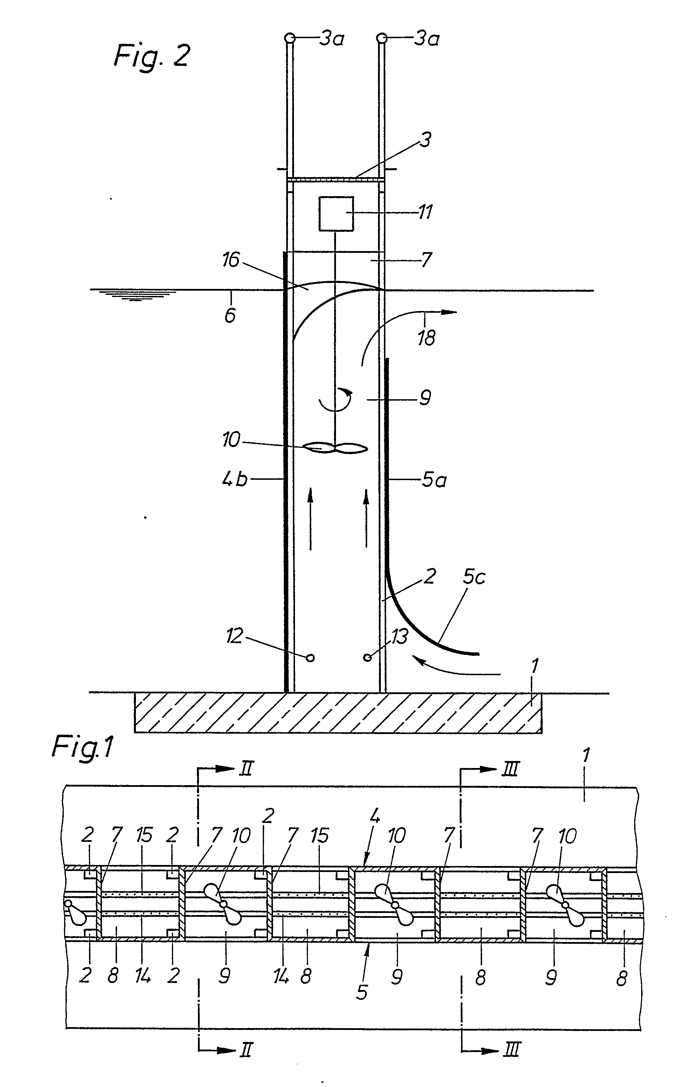

(57) Die Einrichtung zur biologischen Reinigung von Abwässern in Teichen besteht aus zwei senkrechten, in geringem Abstand parallel zueinander angeordneten und den Teich quer zur Durchströmrichtung durchteilenden Leitwänden (4,5), die einen vom Bereich des Teichbodens bis in den Bereich des Wasserspiegels reichenden Schacht begrenzen, in welchem durch Lufteinblasvorrichtungen (14,15) eine Aufwärtsströmung und in Höhe des Wasserspiegels durch Umlenkelemente in eine Oberflächenströmung erzeugt wird. Vom Teichboden bis über den Wasserspiegel reichende Querwände (7) unterteilen den Schacht in Einzelschächte (8,9). Die Leitwände sind von Einzelschacht zu Einzelschacht so nach unten bis zum Teichboden und bis über den Wasserspiegel verlängert ausgebildet, daß die Einzelschächte über freie Einströmquerschnitte im Bereich des Teichbodens und freie Abströmquerschnitte im Bereich des Wasserspiegels abwechseind jeweils nur mit dem zuströmseitigen bzw. dem abströmseitigen Teil des Teiches in offener Verbindung stehen. Die Lufteinblasvorrichtungen sind nur der einen Gruppe der Einzelschächte zugeordnet, während in den Einzelschächten der anderen Gruppe mechanisch antreibbare Fördereinrichtungen (11) vorgesehen sind (Fig. 1).

Fig.1

## Einrichtung zur biologischen Reinigung von Abwässern in Teichen

Die Erfindung betrifft eine Einrichtung zur biologischen Reinigung von Abwässern in Teichen, mit zwei senkrechten, in geringem Abstand parallel zueinander angeordneten und den Teich quer zur Durchströmrichtung durchteilenden Leitwänden, die einen vom Bereich des Teichbodens bis in den Bereich des Wasserspiegels reichenden Schacht begrenzen, sowie mit einer Lufteinblasvorrichtung zur Erzeugung einer Aufwärtsströmung in dem Schacht und in Höhe des Wasserspiegels im Schacht vorgesehenen Umlenkelementen zur Umwandlung der Aufwärtsströmung in eine Oberflächenströmung.

Es sind Einrichtungen vorgenannter Art bekannt (DE-PS 17 67 497), die sich in der Praxis außerordentlich bewährt haben, weil sie einen geringen baulichen Aufwand erfordern, mit einem sehr geringen Energieaufwand betreibbar sind und beiderseits des Schachtes eine walzenförmige Umlaufströmung erzeugen, die bei entsprechender Intensität das Absetzen von Schwebstoffen auf dem Teichgrund verhindern. Mit diesen Einrichtungen lassen sich relativ große Mengen an Luft bzw. Sauerstoff in das Abwasser einbringen, ohne daß merkbare Geräusche oder Zerstäubungen des Abwassers eintreten.

Der Einsatz der bekannten Einrichtungen erfolgte bisher praktisch ausschließlich, um das gesamte in einem Teich befindliche Abwasser einer gleichmäßigen Behandlung zu unterwerfen, um durch biologische Reinigung bestimmte BSB-bzw. CBS-Werte zu erreichen, um das Abwasser ggfs. nach vorheriger Überführung in einen oder mehrere Nachbehandlungsteiche in stehende oder fließende Gewässer einzuleiten.

Der Erfindung liegt die Aufgabe zugrunde, eine Einrichtung der einleitend beschriebenen Art so auszubilden, daß der Teich nicht nur optisch, sondern auch funktionell in zwei Abschnitte unterteilt wird und in den beiden Teilen eine sehr voneinander abweichende Behandlung des Abwassers ermöglicht wird.

Zur Lösung vorstehender Aufgabe kennzeichnet sich die einleitend genannte Einrichtung erfindungsgemäß dadurch, daß der Schacht durch Querwände, die vom Teichboden bis über die Wasseroberfläche reichen, in Einzelschächte unterteilt ist, daß die Leitwände von Einzelschacht zu Einzelschacht so nach unten bis zum Teichboden und bis über den Wasserspiegel verlängert ausgebildet sind, daß die Einzelschächte über freie Einströmquerschnitte im Bereich des Teichbodens und freie Abströmquerschnitte im Bereich des Wasserspiegels abwechselnd jeweils nur mit dem zuströmseitigen bzw. dem abströmseitigen Teil des Teiches in offener Verbindung stehen, und daß die Lufteinblasvorrichtung nur der einen Gruppe der Einzelschächte zugeordnet ist, während in den Einzelschächten der anderen Gruppe mechanisch antreibbare Fördereinrichtungen vorgesehen sind.

Durch die vorgenannte Ausbildung wird es möglich, den einströmseitigen Teil des Teiches als Absetzzone auszubilden und nur eine geringe Umwälzströmung zu erzeugen ohne merkbaren Sauerstoffeintrag, während das Wasser in dem anderen Teil des Teiches einer intensiven walzenförmigen Umwälzströmung bei sehr hohem Sauerstoffeintrag ausgesetzt wird.

Durch die Verwendung der beschriebenen Einrichtung kann ein Teich somit die Funktion von zwei bisher getrennten Teichen übernehmen.

Insbesondere bei Teichanlagen, in denen eine Umwandlung des im Abwasser enthaltenen Stickstoffes und dessen Eliminierung angestrebt wird, ist die neue Einrichtung mit großem Vorteil verwendbar. Hierzu empfiehlt es sich, die mit mechanisch angetriebenen Fördereinrichtungen ausgerüsteten Einzelschächte mit dem zuströmseitigen und die anderen mit Belüftungseinrichtungen ausgerüsteten Einzelschächte mit dem abströmseitigen Teil des Teiches zu verbinden. Hierdurch wird auf der Einströmseite des Teiches eine sauerstoffzehrende Zone geschaffen, welche sich günstig für die Denitrifizierung des Abwassers auswirkt. während in dem anderen Teil des Teiches durch entsprechend starken Sauerstoffeintrag ein Sauerstoffüberschuß in dem Abwasser erreicht werden kann, der seinerseits zu einer Nitrit-bzw. Nitratbildung führt. so daß die als Ammonium bzw. als organischer Stickstoff mit dem Abwasser in den Teich einströmenden Stickstoffverbindungen in dem abströmseitigen Teil des Teiches durch den hohen Sauerstoffeintrag zu Nitriten bzw. Nitraten umgewandelt werden. Diese Umwandlung ist deshalb besonders bedeutungsvoll. weil die in dem zufließenden Abwasser befindlichen Stickstoffverbindungen in der Form von $NH^+$, sehr fischgiftig sind und in dieser Form nicht im Abwasser verbleiben können. Ihre Umwandlung in Nitrite bzw. Nitrate ist aus diesem Grunde sowie auch deshalb notwendig. weil bei einer angestrebten Eliminierung des Stickstoffes dieser zunächst in die Form von Nitriten bzw. Nitraten umgewandelt werden muß. ehe durch erneute Behandlung in einer sauerstoffarmen Zone die Umwandlung in flüchtigen Stickstoff und Sauerstoff ermöglicht wird, wobei der Sauerstoff wiederum in dem Abwasser für die Oxidation der Kohlenstoffverbindungen wirksam wird.

2

Die neue Einrichtung ist jedoch nicht auf den vorbeschriebenen Anwendungsfall begrenzt, sondern kann überall dort eingesetzt werden, wo in einem Teil des Teiches mit einem geringen Sauerstoffeintrag oder erhöhter Umwälzgeschwindigkeit bzw. Durchmischungsturbulenz und im anderen Teil des Teiches mit einer großen Sauerstoffzufuhr und Durchmischung des Abwassers mit dem eingetragenen Sauerstoff gearbeitet werden soll.

Bei einer praktischen Ausführungsform sind die mechanischen Fördereinrichtungen in den entsprechenden Einzelschächten als Flügel- bzw. Propellerförderer ausgebildet. Zweckmäßigerweise sind sie über regelbare Getriebe mit einem Antrieb verbunden, so daß die Umwälzintensität bzw. die Umwälzströmung in weiten Grenzen verändert werden kann.

Um die Berührungszeit der eingetragenen Luft mit dem Abwasser zu verlängern, kann wenigstens in einem Teil der mit der Lufteinblasvorrichtung zusammenwirkenden Einzelschächte oberhalb der Lufteinblasvorrichtungen jeweils eine den Schachtquerschnitt ausfüllende, nach Art eines Tropfkörpers ausgebildete Festkörperfüllung vorgesehen sein. Derartige Ausgestaltungen der Einzelschächte sind insbesondere dann zweckmäßig, wenn in dem entsprechenden Teil des Teiches eine Nitrifizierung angestrebt wird, da die Festkörperfüllung zusätzliche Aufwuchsfläche für Nitrifikanten bietet, jedoch andererseits durch die erzeugte Strömung infolge des Lufteintrags eine verfahrensbehindernde Abdeckung der Nitrifikanten durch Sekundärschlamm bei gleichzeitigem Eintrag des Sauerstoffes verhindert wird.

Um im Falle sehr unterschiedlicher Zusammensetzungen des Abwassers die Einrichtung wahlweise in der obengenannten oder aber in der bekannten einleitend beschriebenen Weise verwenden zu können, empfiehlt es sich, eine zweite Lufteinblasvorrichtung vorzusehen, welche der Gruppe der Einzelschächte mit den mechanisch antreibbaren Fördereinrichtungen zugeordnet ist. Bei dieser Ausbildung hat man es in der Hand, sowohl den Lufteintrag als auch die hierdurch erzeugte Umwälzströmung als auch unabhängig von dem Lufteintrag die durch die mechanisch antreibbaren Fördermittel erzeugte Strömungsintensität in weiten Grenzen zu verändern, um optimale Behandlungsbedingungen des in diesem Teil des Teiches befindlichen Abwassers zu erzielen.

Die Zeichnung gibt ein Ausführungsbeispiel der Erfindung in schematischer Darstellung wieder.

Es zeigen:

Fig. 1 eine Schnittdarstellung dicht unterhalb der Wasseroberfläche durch die Einrichtung nach der Erfindung,

Fig. 2 ein vergrößertes Schnittbild entlang der Schnittlinie II-II in Fig. 1,

Fig. 3 entsprechend Fig. 2 ein Schnittbild entlang der Schnittlinie III-III in Fig. 1.

In den Figuren ist mit 1 eine Fundamentplatte der dargestellten Vorrichtung bezeichnet, auf der ein Stützgerüst 2 verankert ist, welches an seinem oberen Ende einen Laufsteg 3 trägt, der sich in Längsrichtung über die gesamte Einrichtung erstreckt. An den oberen Enden der lotrechten Ständer des Stützgerüstes 2 sind Handläufe 3a erkennbar.

An dem Stützgerüst 2 sind beiderseits Leitwände befestigt, die insgesamt mit 4 bzw. 5 bezeichnet sind und sich gemäß Fig. 1 über die gesamte Länge der wiedergegebenen Einrichtung erstrecken. Die Leitwände 4 und 5 begrenzen einen sich vom Bereich des Teichbodens bzw. der Fundamentplatte 1 bis zum Wasserspiegel 6 verlaufenden, quer durch den Teich hindurchgehenden Schacht, welcher durch Querwände 7 in Einzelschächte 8 bzw. 9 unterteilt ist, die sich von der Fundamentplatte 1 bis über den Wasserspiegel erstrecken.

Die mit 8 bezeichneten Einzelschächte bilden dabei die eine und die mit 9 bezeichneten Schächte die andere Gruppe.

In den Einzelschächten 9 ist jeweils eine mechanisch antreibbare Fördereinrichtung 10 in Form eines Flügel- bzw. Propellerförderers vorgesehen, welcher mit einem regelbaren Antrieb 11 verbunden ist. Die Antriebe 11 der einzelnen Förderer 10 können dabei über eine gemeinsame Antriebswelle miteinander verbunden sein.

Durch alle Einzelschächte 8 und 9 hindurch erstrecken sich dicht oberhalb der Fundamentplatte Luftzuführungsrohre 12 und 13, die im Bereich der Schächte 8 durch Anordnung entsprechender Austrittsöffnungen als Lufteinblasvorrichtungen 14 bzw. 15 ausgeführt sind, so daß in den Einzelschächten 8 durch austretende Luftblasen 25 eine entsprechende Auftriebsströmung erzeugt wird.

In allen Einzelschächten 8 bzw. 9 sind im Bereich des Wasserspiegels 6 Umlenkelemente 16 vorgesehen, welche die in den Einzelschächten 8 bzw. 9 durch die Luftblasen 25 bzw. durch die antreibbare Fördereinrichtung 11 erzeugte Aufwärtsströmung des Wassers in eine Oberflächenströmung umwandelt, wie durch die Pfeile 17 bzw. 18 gezeigt ist.

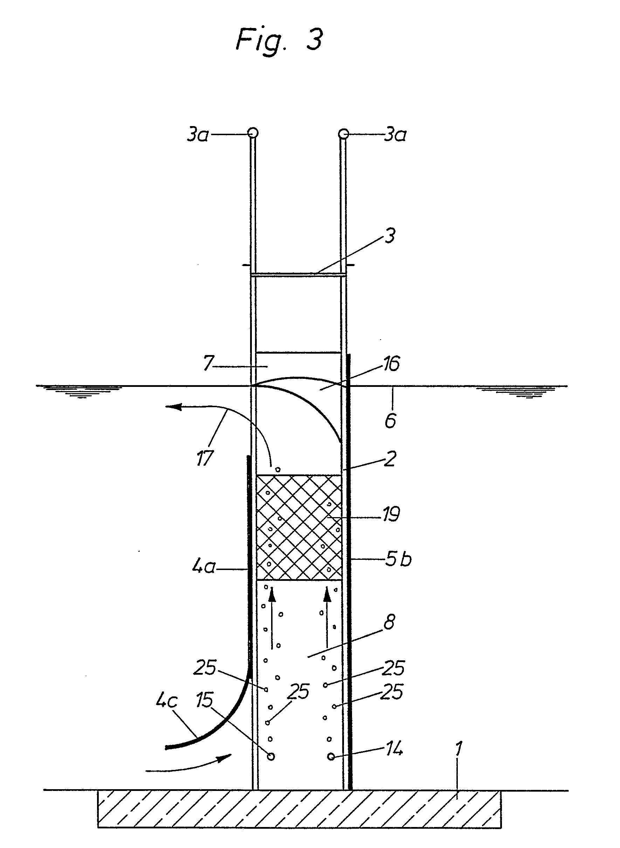

Die Schnittdarstellungen der Fig. 3 und 2 zeigen, daß die Leitwände 4 und 5 im Bereich der Schächte 8 und 9 eine unterschiedliche Ausbildung aufweisen. So bilden die Leitwände 4 gemäß Fig. 2 in dem jeweiligen Bereich der Schächte 9 Abschnitte 4b, welche sich von dem Fundamentblock 1 bis über den Wasserspiegel und bis in die Höhe der über den Wasserspiegel herausragenden Querwände 7 erstrecken. Auf der gegenüberliegenden Seite bilden die Leitwände 5 zur Begrenzung eines jeden Einzelschachtes 9 Abschnitte 5a, die sich nur bis unter die Wasseroberfläche 6 erstrecken und nach unten hin auch oberhalb der Fundamentplatte 1 enden, wobei in dem Ausführungsbeispiel bis dicht über die Fundamentplatte 1 reichende gekrümmte Fortsetzungen 5c erkennbar sind. Durch diese Ausgestaltung der Einzelschächte 9 ergeben sich auf der Seite der Leitwände 5 bzw. ihrer Abschnitte 5a freie untere Einströmquerschnitte und im Bereich des Wasserspiegels 6 auf der gleichen Seite liegende freie Ausströmquerschnitte, während durch die Abschnitte 4a der Austritt des Wassers auf der gegenüberliegenden Seite ausgeschlossen ist.

Umgekehrt sind bei den Schächten 8 gemäß Fig. 3 diese längs der Leitwand 5 durch Abschnitte 5b in Verbindung mit den Querwänden 7 geschlossen ausgebildet und auf der Seite der Leitwand 4 durch die Abschnitte 4a begrenzt, so daß die Einzelschächte 8 auf der durch die Leitwand 4 begrenzten Seite untere offene Einströmquerschnitte und auf der gleichen Seite befindliche obere offene Ausströmquerschnitte aufweisen.

Es erfolgt somit durch die in den Fig. 1 bis 3 wiedergegebene Einrichtung eine Unterteilung des Teiches, wobei das Abwasser des einen Teiles des Teiches nur durch die Einzelschächte 8 und das Abwasser des anderen Teiles des Teiches nur durch die Einzelschächte 9 in der beschriebenen Weise hindurchströmen kann, wie dies auch durch die Strömungspfeile in den Fig. 2 und 3 angedeutet ist.

Die Schachtabschnitte 8, in denen die Luftzuführungsrohre 12 und 13 Lufteintragseinrichtungen 14 und 15 bilden, können gemäß Fig. 3 oberhalb der genannten Lufteintragseinrichtungen mit einer nach Art eines Tropfkörpers ausgebildeten Festkörperfüllung 19 ausgerüstet sein, welche den Querschnitt des Schachtabschnittes 8 voll ausfüllt. Derartige Festkörperfüllungen können aus einer Packung von Kunststoffnetzen bestehen, die eine sehr große Oberfläche bilden, jedoch andererseits keinen großen Strömungswiderstand für das aufwärtsströmende Wasser und die mitgeführten Luftbläschen darstellen.

## Ansprüche

1. Einrichtung zur biologischen Reinigung von Abwässern in Teichen, mit zwei senkrechten, in geringem Abstand parallel zueinander angeordneten und den Teich quer zur Durchströmrichtung durchteilenden Leitwänden, die einen vom Bereich des Teichbodens bis in den Bereich des Wasserspiegels reichenden Schacht begrenzen, sowie mit einer Lufteinblasvorrichtung zur Erzeugung einer Aufwärtsströmung in dem Schacht und in Höhe des Wasserspiegels im Schacht vorgesehenen Umlenkelementen zur Umwandlung der Aufwärtsströmung in eine Oberflächenströmung, **dadurch gekennzeichnet,** daß der Schacht durch Querwände (7), die vom Teichboden bis über die Wasseroberfläche (6) reichen, in Einzelschächte (8,9) unterteilt ist, daß die Leitwände (4,5) von Einzelschacht zu Einzelschacht so nach unten bis zum Teichboden und bis über den Wasserspiegel verlängert ausgebildet sind, daß die Einzelschächte über freie Einströmquerschnitte im Bereich des Teichbodens und freie Abströmquerschnitte im Bereich des Wasserspiegels abwechselnd jeweils nur mit dem zuströmseitigen bzw. dem abströmseitigen Teil des Teiches in offener Verbindung stehen, und daß die Lufteinblasvorrichtung (14,15) nur der einen Gruppe der Einzelschächte (8) zugeordnet ist, während in den Einzelschächten (9) der anderen Gruppe mechanisch antreibbare Fördereinrichtungen (10) vorgesehen sind.

2. Einrichtung nach Anspruch 1, **dadurch gekennzeichnet,** daß die mit mechanisch angetriebenen Fördereinrichtungen (10) ausgerüsteten Einzelschächte (9) mit dem zuströmseitigen und die anderen Einzelschächte (8) mit dem abströmseitigen Teil des Teiches verbunden sind.

3. Einrichtung nach Anspruch 1 oder 2, **dadurch gekennzeichnet,** daß die mechanischen Fördereinrichtungen (10) als Flügel-bzw. Propellerförderer ausgebildet sind.

4. Einrichtung nach einem der vorhergehenden Ansprüche, **dadurch gekennzeichnet,** daß wenigstens in einem Teil der mit der Lufteinblasvorrichtung (14,15) zusammenwirkwenden Einzelschächte (8) oberhalb der Lufteinblasvorrichtungen jeweils eine den Schachtquerschnitt ausfüllende, nach Art eines Tropfkörpers ausgebildete Festkörperfüllung (19) vorgesehen ist.

5. Einrichtung nach einem der vorhergehenden Ansprüche, **gekennzeichnet durch** eine zweite Lufteinblasvorrichtung, welche der Gruppe der Einzelschächte (9) mit den mechanisch antreibbaren Förderern (10) zugeordnet ist.

*Fig. 2*

*Fig.1*

# Fig. 3

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 807 563  (REID) <br> * Figuren 1-3 * <br><br> --- | 1 | C 02 F 3/12 <br> C 02 F 3/20 <br> C 02 F 3/06 |
| A | "LEHR- UND HANDBUCH DER ABWASSERTECHNIK", dritte Auflage, Band IV, Juli 1985, Seiten 50,53-55, Verlag für Architektur und technische Wissenschaften, Berli, DE <br> *  Seite 50, Figur 2.2-9c; Seiten 54,55, Absatz 2.2.5.4 * <br><br> --- | 1 | |
| A | US-A-2 359 004  (SCHLENZ et al.) <br> * Figur 4 * <br><br> --- | 3 | |
| A,P | PATENT ABSTRACTS OF JAPAN, Band 10, Nr. 230 (C-365)[2286], 9. August 1986; & JP-A-61 64 393 (SANKYO CO. LTD.) 02-04-1986 <br><br> --- | 4 | |
| A | CH-A- 494 319  (ORENSTEIN & KOPPEL AG) <br> * Ansprüche; Figur * & DE-A-1 767 497 (Kat. A,D) <br><br> ----- | 1,5 | RECHERCHIERTE SACHGEBIETE (Int. Cl.4) <br><br> C 02 F |

Der vorliegende Recherchenbericht wurde für alle Patentansprüche erstellt.

| Recherchenort | Abschlußdatum der Recherche | Prüfer |
|---|---|---|
| DEN HAAG | 12-08-1987 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82